Europäisches Patentamt

European Patent Office

Office européen des brevets

(19)

(11) **EP 0 945 197 A1**

(12) **EUROPÄISCHE PATENTANMELDUNG**

(43) Veröffentlichungstag:
 **29.09.1999 Patentblatt 1999/39**

(21) Anmeldenummer: **99104506.3**

(22) Anmeldetag: **06.03.1999**

(51) Int. Cl.⁶: **B21D 47/00**, B22F 3/11,
 B22F 3/18,  B22F 7/04,
 B32B 5/20

(84) Benannte Vertragsstaaten:
 **AT BE CH CY DE DK ES FI FR GB GR IE IT LI LU
 MC NL PT SE**
 Benannte Erstreckungsstaaten:
 **AL LT LV MK RO SI**

(30) Priorität: **27.03.1998 DE 19813554**

(71) Anmelder: **VAW Aluminium AG
 D-53117 Bonn (DE)**

(72) Erfinder:
 • **Dumont, Christian Dr.
 53332 Bornheim (DE)**
 • **Schmitz, Norbert
 53881 Euskirchen (DE)**

(74) Vertreter:
 **Müller-Wolff, Thomas, Dipl.-Ing. et al
 HARWARDT NEUMANN
 Patent- und Rechtsanwälte,
 Brandstrasse 10
 53721 Siegburg (DE)**

(54) **Verbundblech oder -band in Sandwichstruktur sowie Verfahren zu seiner Herstellung**

(57)    Die Erfindung betrifft ein Verbundblech oder -band in Sandwichstruktur, das aus einem aufschäumbaren Kern und einer oberen und unteren Plattierauflage (8,9) besteht, wobei der Kern aus mehreren treibmittelhaltigen PM-Walzbarren (1,2,3) besteht, die an ihren Schmalseiten form- und/oder kraftschlüssig miteinander verbunden sind. Ferner betrifft die Erfindung ein Verfahren zur Herstellung von umformbaren Verbundblechen oder -bändern in Sandwichstruktur durch Strangpressen eines Blocks aus einer aufschäumbaren PM-Legierung zu einem Walzbarren (1,2,3) mit Rechteckquerschnitt, wobei die zumindest teilweise aus einer treibmittelhaltigen Aluminiumlegierung bestehenden Blöcke zu Formaten mit rechteckförmigem Walzbarrenquerschnitt mit an den Schmalseiten form- und/oder kraftschlüssig ineinander steckbaren Erhebungen und/oder Vertiefungen stranggepreßt werden, mehrere Formate der Walzbarren an ihren Schmalseiten zu großformatigen Verbundblechen miteinander verklammert und verhakt werden (4-7,10-13), die miteinander verhakten oder verklammerten Walzbarrenformate durch Plattierwalzen mit einer einheitlichen Deckschicht versehen werden und die aus den plattierten Walzbarrenformaten hergestellten Verbundbleche oder -bänder umgeformt und danach unter Druck und Temperatureinwirkung aufgeschäumt werden.

Fig. 1

EP 0 945 197 A1

## Beschreibung

Für die Herstellung von Blechen und Bändern in Sandwichstruktur ist es bekannt, ein Metallpulver mit einem Treibmittel zu vermischen, diese Mischung zu einem Block zu verdichten und diesen Block dann als Walzbarren für die Herstellung von Blechen oder Bändern zu verwenden. Üblicherweise werden die Walzbarren stranggepreßt, so daß die Blech- oder Bandbreiten auf etwa 500 mm begrenzt sind, da die Strangpreßkräfte gegenwärtig keine größeren Formate zulassen.

Aus der DE-OS 41 01 630 (Fraunhofer-Gesellschaft) ist es bekannt, aufschäumbare Metallkörper dadurch herzustellen, daß Metallpulver mit einem Treibmittel vermischt und durch Heißkompaktieren verdichtet werden, wobei die Verbindung zwischen den einzelnen Metallpulverteilchen überwiegend durch Diffusion erfolgt.

Obwohl die Diffusion zwischen den Teilchen bereits bei Temperaturen im Bereich von etwa 400 °C einsetzt, können aufschäumbare Metallkörper durch spezielles Walzen auch bei höherer Temperatur hergestellt werden. Diese Verfahren erfordern jedoch eine relativ aufwendige Temperatursteuerung, so daß sich die Serienfertigung derartig hergestellter Metallkörper bisher nicht durchgesetzt hat.

Gemäß einer weiteren Verfahrensvariante ist vorgesehen, homogene Mischungen aus Metallpulver und Treibmittel durch Strangpressen zu einem kompakten, aufschäumbaren Halbzeug zu verdichten und zu verfestigen. Das Walzplattieren des durch Strangpressen hergestellten, aufschäumbaren Halbzeug ist aus der DE-PS 196 12 781 (Karmann) bekannt. Dabei wird aus der Verbindung zweier massivmetallischer Deckschichten und einer noch nicht aufgeschäumten Zwischenschicht eine Sandwichstruktur hergestellt. Aus den eingangs erwähnten Gründen sind jedoch die beim Strangpreßvorgang auftretenden Kräfte begrenzt, so daß die nach dieser Verfahrensvariante erzeugten Sandwichstrukturen nur eine relativ schmale Bandbreite aufweisen.

Aufgabe der vorliegenden Erfindung ist es daher, auf Basis der bekannten Herstellung von Walzbändern oder Blechen unter Verwendung von Strangpreßbarren in ihrer Breite unbeschränkte großformatige Sandwichstrukturen zu erzeugen und ein hierfür in großtechnischem Maßstab einsetzbares Verfahren anzugeben. Die Sandwichstrukturen sollen im nichtaufgeschäumten Zustand gut umformbar und insbesondere gut tiefziebar sein.

Diese Aufgabe wird erfindungsgemäß durch die in den Ansprüchen 1 und 3 angegebenen Merkmale gelöst. Es hat sich gezeigt, daß durch das seitliche Verhaken von Walzbarren nach dem Plattierwalzen eine gut umformbare Sandwichstruktur entsteht. Beim Plattiervorgang wird überraschender Weise die enge Verbindung zwischen den Walzbarren in Längsrichtung beibehalten, da kein Breitungseffekt auftritt. Die Trennebene zwischen den Walzbarrenformaten hat keinen negativen Einfluß auf die Umformung und einen positiven Einfluß auf das Aufschäumverhalten. Sie bewirkt eine mechanische Stabilisierung des Kernes während des Plattiervorganges vermutlich durch einen Reibschweißeffekt, so daß eine homogene Übergangszone zwischen den Formaten entsteht.

Im folgenden wird die Erfindung anhand mehrerer Ausführungsbeispiele näher erläutert. Es zeigen:

Fig. 1    Querschnitt durch ein erfindungsgemäß ausgebildetes Verbundblech oder -band in Sandwichstruktur;

Fig. 2    Weitere Varianten mit verschieden ausgebildeter Profilkante;

Fig. 3    Blockschaltbild für den erfindungsgemäßen Herstellungsprozeß.

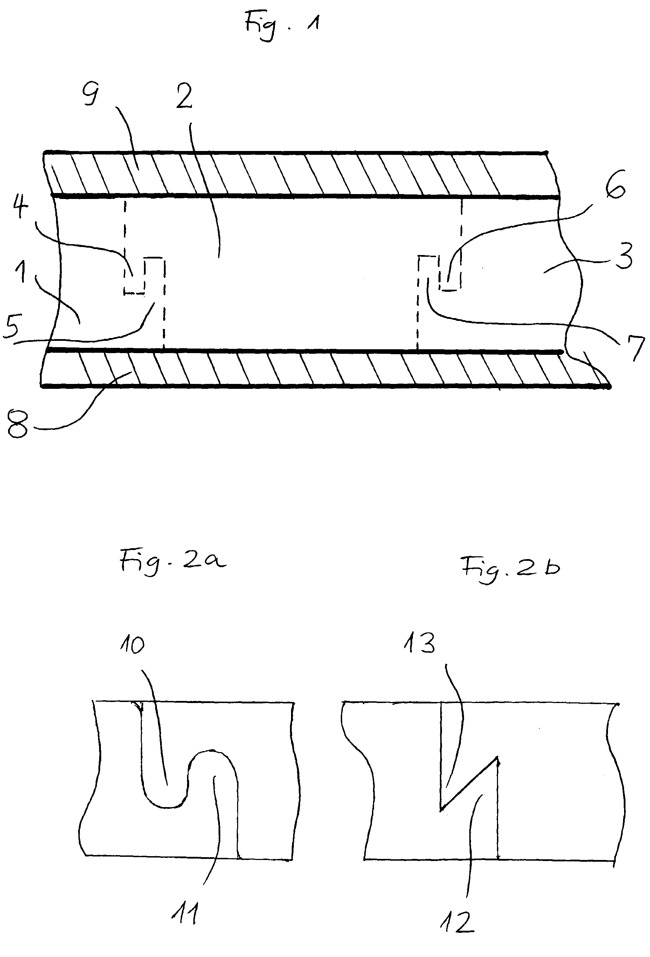

Gemäß Figur 1 sind drei Walzbarren 1, 2, 3 mit hakenförmigen Fortsätzen 4 - 7 formschlüssig verklammert. Das Mittelteil der Walzbarren ist im Querschnitt T-förmig ausgebildet, wobei die seitlich angeordneten Walzbarren 1, 3 unter den Vorsprung des horozontalen T- Astes mit Haken 4, 7 eingreifen.

Während die Verklammerung an den Schmalseiten der Walzbarren 1, 2, 3 erfolgt, ist auf den Breitseiten jeweils eine Plattierauflage 8, 9 angeordnet. Als besonders geeigneter Werkstoff für die Plattierauflage sind Aluminiumlegierungen vom Typ AlMn, AlMg und AlMnMg, AlMgSi zu nennen.

Die Walzbarren 1 - 3 sind als Strangpreßprofile aus aufschäumbaren PM-Legierungen (PM-Legierung = auf pulvermetallurgischem Wege hergestellte Legierung) ausgebildet. Im dargestellten Beispiel nach Figur 1 handelt es sich um den Zustand vor dem Plattierwalzen. Nach dem Plattierwalzen und Aufschäumen werden die Konturen der Walzbarren praktisch aufgelöst und es entsteht eine einheitliche Sandwichstruktur. Die verklammerten und plattiergewalzten Formate sind gut umformbar und sogar tiefziehbar.

In Figur 2 sind weitere Beispiele für die Ausbildung der Profilkanten der Walzbarren dargestellt. Figur 2a zeigt (im Querschnitt S-förmig) abgerundete Stege 10, 11, die auch über größeren Längen ohne Verkanten ineinandergesteckt werden können. Figur 2b zeigt eine Anwendung für Walzbarren mit relativ kurzer Schmalseite, bei denen die Stegflächen 12, 13 kantig (im Querschnitt Z-förmig) ausgebildet sind.

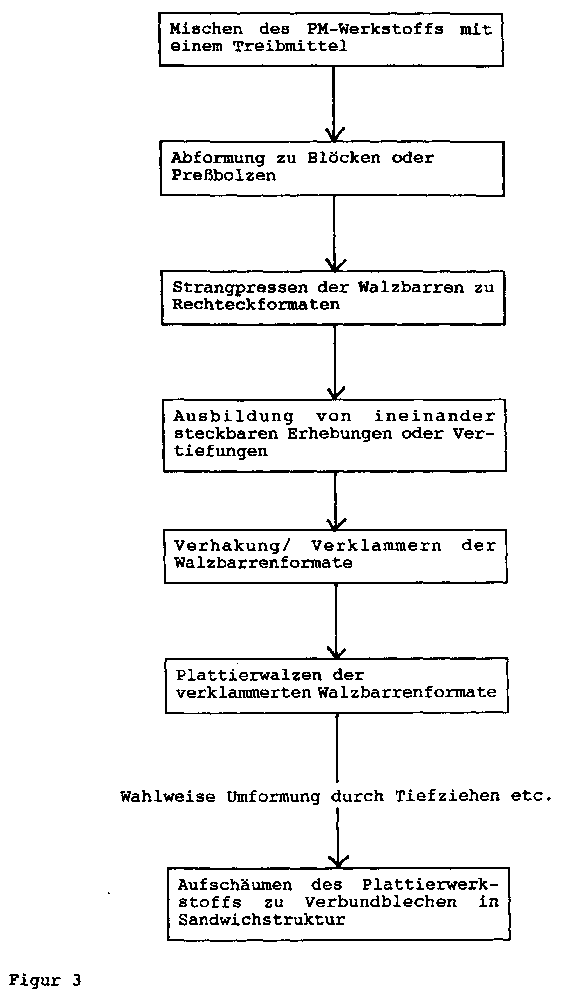

Figur 3 zeigt noch einmal den Ablaufplan für die Herstellung einer erfindungsgemäßen Sandwichstruktur. Nach dem Mischen des PM-Werkstoffs, bevorzugt Aluminium-Silicium aus 7 - 15 % Silicium, Rest Aluminium und herstellungsbedingte Verunreinigungen, mit einem Treibmittel aus Metallhydrid, vorzugsweise aus Aluminiumhydrid, werden Blöcke bzw. Preßbolzen zu geeigneten Abmessungen geformt, die anschließend stranggepreßt werden können.

Es ist besonders vorteilhaft gleich eine entsprechende Verklammerungsmöglichkeit an den Walzbarrenprofilen vorzusehen. Da es sich um rechteckförmige Walzquerschnitte handelt, sind an den Schmalseiten nuten- oder hakenförmige Verklammerungselemente vorgesehen.

Die verklammerten Walzbarren werden dann einer mehrstufigen Plattierwalzung unterzogen, wobei darauf zu achten ist, daß die Querschnittsabnahme progressiv erfolgt, so daß die Verklammerung der Walzbarren am Anfang nicht gelöst und durch die letzten Walzstiche ein Reibschweißverbund erzeugt wird.

Das Aufschäumen des Plattierwerkstoffs zur Sandwichstruktur erfolgt bei der der jeweiligen Zusammensetzung des Treibmittels entsprechenden "Zündtemperatur". Vorher kann der Plattierwerkstoff mit den bekannten Umformverfahren, wie Tiefziehen, Biegen, Kanten, Drücken etc., verformt werden.

Dabei können Tiefziehverhältnisse $\beta$ = Do/do von 1,3 - 1,9 erreicht werden.

## Patentansprüche

1. Verbundblech oder -band in Sandwichstruktur, das aus einem aufschäumbaren Kern und einer oberen und unteren Plattierauflage (8,9) besteht,
   dadurch gekennzeichnet,

   daß der Kern aus mehreren treibmittelhaltigen PM-Walzbarren (1, 2, 3) besteht, die an ihren Schmalseiten form- und/oder kraftschlüssig miteinander verbunden sind.

2. Verbundblech oder -band nach Anspruch 1,
   dadurch gekennzeichnet,

   daß an den Schmalseiten der Walzbarren (1, 2, 3) nuten- und/oder hakenförmige Verklammerungen (4-7, 10-13) angeformt sind.

3. Verbundblech nach einem der vorhergehenden Ansprüche,
   dadurch gekennzeichnet,

   daß als Treibmittel ein Metallhydrid verwendet wird.

4. Verbundblech nach einem der vorhergehenden Ansprüche,
   dadurch gekennzeichnet,

   daß in der Blech- oder Bandmitte mindestens ein Walzbarren mit einem Treibmittelzusatz und im Randbereich der Bleche oder Bänder Walzbarren aus schmelzmetallurgisch hergestellten Legierungen angeordnet sind.

5. Verfahren zur Herstellung von umformbaren Verbundblechen oder -bändern in Sandwichstruktur gemäß einem der vorhergehenden Ansprüche durch Strangpressen eines Blocks aus einer aufschäumbaren PM-Legierung zu einem Walzbarren mit Rechteckquerschnitt,
   dadurch gekennzeichnet, daß

   - die zumindest teilweise aus einer treibmittelhaltigen Aluminiumlegierung bestehenden Blöcke zu Formaten mit rechteckförmigen Walzbarrenquerschnitt mit an den Schmalseiten form- und/oder kraftschlüssig ineinander steckbaren Erhebungen und/oder Vertiefungen stranggepreßt werden,
   - mehrere Formate der Walzbarren an ihren Schmalseiten zu großformatigen Verbundblechen miteinander verklammert und verhakt werden, die miteinander verhakten oder verklammerten Walzbarrenformate durch Plattierwalzen mit einer einheitlichen Deckschicht versehen werden und
   - die aus den plattierten Walzbarrenformaten hergestellten Verbundbleche oder -bänder umgeformt und danach unter Druck und Temperatureinwirkung aufgeschäumt werden.

6. Verfahren nach einem der vorhergehenden Ansprüche,
   dadurch gekennzeichnet,

   daß die Erhebungen oder Vertiefungen beim Strangpressen des Blocks erzeugt werden.

7. Verfahren nach einem der vorhergehenden Ansprüche,
   dadurch gekennzeichnet,

   daß die Erhebungen oder Vertiefungen nachträglich durch spanende Bearbeitung der Walzbarren geformt werden.

8. Verfahren nach einem der vorhergehenden Ansprüche,
   dadurch gekennzeichnet,

   daß die Erhebungen oder Vertiefungen aus nuten- und/oder hakenförmigen Verklammerungen bestehen, die miteinander beim Walzvorgang verkeilt werden.

9. Verfahren nach einem der vorhergehenden Ansprüche,
   dadurch gekennzeichnet,

   daß der Treibmittelzusatz mit einer Leichtmetallegierung aus Aluminium-Silicium mit 7 - 15 % Silicium vermischt und zu einem Block geformt wird, der zu Formaten mit formschlüssigen Erhebungen und/oder Vertiefungen Stranggepreßt wird.

10. Verfahren nach einem der vorhergehenden Ansprüche,
dadurch gekennzeichnet,

daß in der Blech- oder Bandmitte mindestens ein Walzbarren mit einem Treibmittelzusatz und im Randbereich der Bleche oder Bänder Walzbarren aus schmelzmetallurgisch hergestellten Legierungen verwendet werden, wobei das Aufschäumen nach vorhergegangener Umformung durch Temperaturerhöhung auf Zündtemperatur des Treibmittels erfolgt.

11. Verfahren nach einem der vorhergehenden Ansprüche,
dadurch gekennzeichnet,

daß die Queschnittsabnahme beim Walzen progressiv erfolgt, wobei im letzten Walzteil ein Reibschweißverbund zwischen den Verbundblechen erfolgt.

Fig . 1

Fig . 2a

Fig . 2b

| Mischen des PM-Werkstoffs mit einem Treibmittel |
| --- |

↓

| Abformung zu Blöcken oder Preßbolzen |
| --- |

↓

| Strangpressen der Walzbarren zu Rechteckformaten |
| --- |

↓

| Ausbildung von ineinander steckbaren Erhebungen oder Vertiefungen |
| --- |

↓

| Verhakung/ Verklammern der Walzbarrenformate |
| --- |

↓

| Plattierwalzen der verklammerten Walzbarrenformate |
| --- |

Wahlweise Umformung durch Tiefziehen etc.

↓

| Aufschäumen des Plattierwerkstoffs zu Verbundblechen in Sandwichstruktur |
| --- |

Figur 3

**Europäisches Patentamt**

# EUROPÄISCHER RECHERCHENBERICHT

Nummer der Anmeldung

EP 99 10 4506

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DE 44 26 627 A (FRAUNHOFER-GESELLSCHAFT ZUR FÖRDERUNG DER ANGEWANDTEN FORSCHUNG E.V.) 2. Februar 1995 (1995-02-02) * Spalte 1, Zeile 54 - Spalte 2, Zeile 59; Ansprüche 1-7; Abbildungen 1,2; Beispiele 1,2 * --- | 1-11 | B21D47/00 B22F3/11 B22F3/18 B22F7/04 B32B5/20 |
| D,A | DE 196 12 781 C (WILHELM KARMAN GMBH) 21. August 1997 (1997-08-21) * Spalte 2, Zeile 57 - Spalte 5, Zeile 18; Ansprüche 1,6; Abbildungen 3,4 * --- | 1-11 | |
| D,A | DE 41 01 630 A (FRAUNHOFER-GESELLSCHAFT ZUR FÖRDERUNG DER ANGEWANDTEN FORSCHUNG EV) 12. Dezember 1991 (1991-12-12) * Anspruch 1; Abbildung 1; Beispiele 1-6 * ----- | 1-11 | |

|  | RECHERCHIERTE SACHGEBIETE (Int.Cl.6) |
|---|---|
|  | B21D B22F B32B |

Der vorliegende Recherchenbericht wurde für alle Patentansprüche erstellt

| Recherchenort | Abschlußdatum der Recherche | Prüfer |
|---|---|---|
| MÜNCHEN | 21. Juli 1999 | Vinci, V |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 99 10 4506

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-07-1999

| Im Recherchenbericht angeführtes Patentdokument | Datum der Veröffentlichung | Mitglied(er) der Patentfamilie | Datum der Veröffentlichung |
|---|---|---|---|
| DE 4426627 A | 02-02-1995 | KEINE | |
| DE 19612781 C | 21-08-1997 | EP 0798062 A | 01-10-1997 |
| | | JP 10058575 A | 03-03-1998 |
| DE 4101630 A | 12-12-1991 | DE 4018360 C | 29-05-1991 |
| | | AT 142135 T | 15-09-1996 |
| | | CA 2044120 A | 09-12-1991 |
| | | DE 4124591 C | 11-02-1993 |
| | | DE 59108133 D | 10-10-1996 |
| | | EP 0460392 A | 11-12-1991 |
| | | JP 4231403 A | 20-08-1992 |
| | | US 5151246 A | 29-09-1992 |

EPO FORM P0461

Für nähere Einzelheiten zu diesem Anhang : siehe Amtsblatt des Europäischen Patentamts, Nr.12/82